# EUROPÄISCHE PATENTANMELDUNG

(11) **EP 1 073 019 A2**
(43) Veröffentlichungstag der Anmeldung: **31.01.2001**
(21) Anmeldenummer: 00111064.2
(22) Anmeldetag: 02.06.2000
(51) Int. Cl.: G07F 7/10, G06K 19/073

(54) **Verfahren und Vorrichtung zur Übertragung von Daten auf SmartCards**

(30) Priorität: 02.06.1999 DE 19925389
(71) Anmelder: Beta Research GmbH, 85774 Unterföhring (DE)
(72) Erfinder: Fröhlich, Hans-Hermann, 81673 München (DE); Mester, Roland, 81827 München (DE); Schmidl, Michael, 80993 München (DE)
(74) Vertreter: Heselberger, Johannes

(57) **Zusammenfassung**

Verfahren und System zur Übertragung von Daten (3) mit einer Sendeeinheit (1) und einer SmartCard (2), wobei die Sendeeinheit (1) eine Ausgabeeinheit zur Weitergabe der Daten (3) an die SmartCard (2) und die SmartCard (2) eine Eingabeeinheit zur Entgegennahme der Daten (3) von der Sendeeinheit (1) enthält, wobei die Sendeeinheit (1) eine Funktion zur Verschlüsselung (4) der Daten (3) auf der Grundlage von spezifischen Informationen (6, 7) der SmartCard (2) mit Hilfe eines ersten Schlüssels (5) und die SmartCard (2) eine Funktion zur Entschlüsselung (8) der Daten (3) auf der Grundlage der spezifischen Informationen (6, 7) der SmartCard (2) mit Hilfe eines zweiten Schlüssels (9) aufweist.

## Beschreibung

Die vorliegende Erfindung betrifft ein Verfahren und ein System zum sicheren Übertragen von Daten auf SmartCards, insbesondere die sichere Programmierung von Programmcode über abhörbare Netzwerke.

Bei Standard-Chipkarten wird der Programmcode bei der Herstellung durch eine Maske auf dem Chip fixiert. Dies bedeutet, daß die Funktion und die auf der Karte vorhandenen Programmdaten bei der Herstellung feststehen müssen. Dies verursacht eine relativ lange Zeit, um Änderungen in den Programmcode der Chipkarte einzufügen. Zu diesem Zweck müssen von jedem Kartentyp eine große Anzahl von Karten hergestellt und diese dann zum größten Teil gelagert werden, da der momentane Bedarf im Regelfall nicht entsprechend groß ist.

Bei neueren Chipkarten ist dagegen ein Laden von Programmcode und damit ein programmieren der Chipkarten auch nach der Herstellung möglich. Diese programmierbaren Chipkarten werden im folgenden auch als SmartCards bezeichnet. Bei bekannten SmartCards kann der Programmcode geladen werden, nachdem sich der Programmierer gegebenenfalls authentifiziert hat. So eine Authentifizierung kann dadurch erfolgen, daß der Programmierer der SmartCard seine Kenntnis eines Geheimnisses der SmartCard nachweist, wobei dieses Geheimnis den Schlüssel zur Programmierungserlaubnis darstellt. Die Programmierung erfolgt, gegebenenfalls nach erfolgreicher Authentifizierung, dann direkt im Maschinencode.

Die Programmierung findet normalerweise zentral beim Hersteller oder Betreiber der SmartCards statt. Hierfür benötigt der Betreiber der SmartCards eine Initialisierungseinrichtung in der alle SmartCards mit dem benötigten Programmcode ausgestattet werden können. Bei der Verwendung dieses Verfahrens liefert der Hersteller der Karten nicht mehr viele Karten mit unterschiedlichen Funktionen, die dann gelagert werden müssen, sondern es wird ein Kartentyp geliefert, aufgrund dessen dann in der Initialisierungseinheit je nach Bedarf Kartentypen mit bestimmten Funktionen fertiggestellt werden können. Dadurch kann der Betreiber auf Änderungen am Programmcode schneller reagieren, kurzfristiger neue Kartentypen mit neuen Funktionen initialisieren und seinen Lageraufwand an fertiggestellten Karten reduzieren. Durch die Initialisierung der Karten durch den Betreiber wird aber auch der Arbeitsaufwand für den Betreiber vergrößert.

Die Aufgabe der Erfindung ist deshalb die Bereitstellung eines Verfahrens und eines Systems bei dem das Laden von Daten, insbesondere Programmcode, auf eine SmartCard einfach, effektiv und sicher durchgeführt wird.

Die Lösung dieser Aufgabe besteht in dem Verfahren und dem System, wie sie in den unabhängigen Ansprüchen beschrieben sind.

Erfindungsgemäß wird ein Verfahren für die Übertragung von Daten zwischen einer Sendeeinheit und einer SmartCard bereitgestellt, das mindestens folgende Schritte aufweist: Verschlüsselung der zu sendenden Daten mit Hilfe eines ersten Schlüssels, Übertragung der verschlüsselten Daten zwischen Sendeeinheit und der SmartCard und Entschlüsselung der übertragenen Daten mit Hilfe eines zweiten Schlüssels, wobei die Daten auf der Grundlage von spezifischen Informationen der SmartCard ver- und entschlüsselt werden.

Durch diese dezentrale Programmierung kann der Programmcode der SmartCards einfach und damit kostengünstig, effektiv und sicher geladen werden. Bei der Sendeeinheit handelt es sich zum Beispiel um eine Einheit, die mit einer Datenbank des Betreiber in Verbindung steht. Bei der SmartCard handelt es sich um eine von dem Betreiber ausgegebene Karte, die noch über keinen funktionsdefinierenden Programmcode verfügt. Allerdings verfügt die SmartCard über spezifische Informationen.

Durch das im Anspruch 1 beschrieben Verfahren, wird die Initialisierung der SmartCards kostengünstiger, weil der Betreiber nun keine Initialisierungseinheit unterhalten muß, in der alle SmartCards initialisiert werden. Außerdem wird nach dem in Anspruch 1 beschrieben Verfahren das Laden des Programmcodes effektiver, da für die Erstellung einer funktionsfähigen SmartCard weniger Arbeitsschritte notwendig sind und nur noch bei verkauften Karten die Funktion festgelegt wird. Dadurch entfällt jegliche Lagerung von Funktions-spezifischen Karten. Durch die Verschlüsselung der übertragenen Daten unter Verwendung der spezifischen Informationen der SmartCard, kann auch gewährleistet werden, daß die zu übertragenen Daten, zum Beispiel der Programmcode, mit einer relativ hohen Sicherheit übertragen werden können.

Hierfür sind in der Sendeeinheit die an die SmartCard zu übermittelnden Daten und die SmartCard-spezifischen Informationen vorhanden. Aus diesen Informationen wird mittels einer Funktion der erste Schlüssel generiert, und mit diesem werden dann in einer Verschlüsselungsfunktion die Daten verschlüsselt.

Bei den zu übertragenen Daten kann es sich beispielsweise um Authentifizierungsdaten, einen weiteren Schlüssel oder auch, vorzugsweise, direkt um den Programmcode handeln. Der Betreiber kann bei dieser Art der Übertragung relativ sicher sein, daß die Daten von keinem unberechtigten verwendet werden können, da sie ja individuell für eine spezielle SmartCard verschlüsselt wurden. Wenn es sich bei den Daten um die sogenannte Authentifizierungsdaten handelt, werden diese Daten nach der Entschlüsselung in der SmartCard zum Beispiel mit bekannten Daten verglichen und auf dieser Grundlage eine Entscheidung über den Ursprung der gesendeten Daten getroffen. Genauso können diese Daten in einer Funktion auf der Grundlage der kartenindividuellen Daten verändert und anschließend wieder an den Betreiber zurückgesendet werden, damit dieser auf der Grundlage dieser zurückgesendeten Daten entscheiden kann, ob er die richtige Karte vor sich hat. Im Rahmen dieser Daten kann auch ein weiterer Schlüssel an die SmartCard übertragen werden, mit dem zum Beispiel grundsätzlich eine bestimmte Kategorie von Daten, beispielsweise eine Programmkategorie des Digitalfernsehsenders, entschlüsselt werden kann. Wie schon oben erwähnt handelt es sich bei den zu übertragenen Daten vorzugsweise um Programmcode. Auf der Grundlage dieses Programmcodes wird die Funktionen der SmartCard, beispielsweise als Teil einer Decodierungsvorrichtung für Pay-TV oder auch als Teil einer Zugangskontrolleinheit für Haustüren, definiert.

Die dafür in der Sendeeinheit und in der SmartCard notwendigen Funktionen können sowohl mit Software, als auch unter Verwendung von zusätzlicher spezifischer Hardware, die dann allerdings schon bei der Erstellung der Karte definiert sein muß, ausgeführt werden.

Die Ver- und Entschlüsselung der zu übertragenen Daten findet unter Verwendung eines ersten und eines zweiten Schlüssels statt. Diese Schlüssel können gleich oder verschieden sein, d.h. also das Verschlüsselungssystem kann symmetrisch oder asymmetrisch sein. Diese Schlüssel werden jeweils in Abhängigkeit von mindestens einer karten-individuellen Information erstellt. Für jede SmartCard existiert damit ein anderer Schlüssel. Das Risiko der Entschlüsselung der zu Übertragenen Daten und damit auch die Herstellung von Dubletten, welches bei der dezentralen Programmierung besteht, wird durch die Verwendung der Schlüssel auf der Grundlage der spezifischen Informationen erheblich erschwert.

Für die Übertragung zwischen der Sendeeinheit und der SmartCard sind alle denkbaren Techniken möglich. Hierbei kann es sich sowohl um Übertragung über eine Schreib-/Lese-Einrichtung, eine Telefonleitung, Fernsehkabel, oder Internet als auch um Funk- oder Satellitenübertragung, handeln. Dabei kann es sein, daß vor der SmartCard noch ein Empfangsmedium benötigt wird, wenn die SmartCard selber nicht über die Technologie verfügt, die gesendeten Daten selber zu empfangen. Diese Empfangseinheit verfügt dann grundsätzlich über eine Eingangs/Ausgangsschnittstelle mit der SmartCard. Ein digitaler Satellitenempfänger, wie zum Beispiel eine Set Top Box für Fernsehgeräte, kann eine solche Empfangseinheit darstellen.

Vorzugsweise handelt es sich bei den spezifischen Informationen um die Losnummer des Chips und/oder die Seriennummer der SmartCard. Denn diese beiden Informationen sind bei allen SmartCards unterschiedlich und ermöglichen deshalb eine Karten-individuelle Verschlüsselung der Daten. Abgehörte Daten können so auch nicht bei anderen Karten mit anderen Los- oder Seriennummern verwendet werden. Die Losnummer hinterläßt der Chiphersteller auf jedem Chip und die Seriennummer wird vom Kartenhersteller jeder Karte mitgegeben. Diese Informationen sind grundsätzlich nicht auslesbar. Sie sind auch bezüglich der SmartCard individuell, das heißt es gibt entweder keine oder wenige diesbezüglich identische SmartCards. Die Herstellung von Duplikaten ist somit stark erschwert oder sogar unmöglich gemacht.

Vorzugsweise werden mittels eines geeigneten Prüfsummenverfahrens, insbesondere Cyclic-Redundancy-Check (CRC), unberechtigte Veränderungen an den Daten auf der SmartCard erkannt. Mit der Hilfe dieses CRC können unter Verwendung von international genormten Prüfpolynomen Bitveränderungen festgestellt werden. Dadurch wird festgestellt, ob sich die Daten auf der SmartCard bei jeder Anwendung der SmartCard im unveränderten Zustand befinden. Dafür wird bei der Initialisierung, oder einer berechtigten Änderung der Karte ein CRC über die gespeicherten Daten gebildet und gespeichert. Bei jedem Neustart wird nun ein neuer CRC über die gespeicherten Daten gebildet und mit dem gespeicherten verglichen. Wenn die beiden Werte der CRC übereinstimmen, sind keine erkennbaren Veränderungen an den gespeicherten Daten vorgenommen worden und die Karte kann weiter verwendet werden. Sollten die Werte allerdings nicht übereinstimmen, dann können zum Beispiel gezielt Daten auf der SmartCard gelöscht und eine damit zusammenhängende Benutzerberechtigung entzogen werden. Mit der Hilfe von diesem Cyclic-Redundancy-Check ist es möglich den Chip gegen Manipulationen durch Hacker zu schützen.

Die vorliegende Erfindung bezieht sich auch auf ein System zur Übertragung von Daten mit einer Sendeeinheit und einer SmartCard, wobei die Sendeeinheit eine Ausgabeeinheit zur Weitergabe der Daten an die SmartCard und die SmartCard eine Eingabeeinheit zur Entgegennahme der Daten von der Sendeeinheit enthält, wobei die Sendeeinheit eine Funktion zur Verschlüsselung der Daten auf der Grundlage von spezifischen Informationen der SmartCard und die SmartCard eine Funktion zur Entschlüsselung der Daten auf der Grundlage der spezifischen Informationen der SmartCard aufweist.

Vorzugsweise erfolgt die Verschlüsselung und die Entschlüsselung der Daten auf der Grundlage der Losnummer des Chips und/oder der Seriennummer der SmartCard. Besonders bevorzugt werden unberechtigte Veränderungen der auf der SmartCard gespeicherten Daten mittels eines geeigneten Prüfsummenverfahrens, insbesondere eines Cyclic Redundancy Check erkannt.

Nach dem im Stand der Technik bekannten Verfahren kauft sich ein Kunde beispielsweise eine Chipkarte für einen Pay-TV-Kanal, auf der bereits der volle Programmcode vorhanden ist. Dieser Code wurde im Rahmen der Produktion und, wenn es sich um SmartCards handelt, in einer Initialisierungseinheit auf die Karte aufgetragen. Diese SmartCard steckt der Kunde in den digitalen Satellitenempfänger (Set Top Box) seines Fernsehgeräts. Darauf gibt die Karte entsprechend ihrem Programmcode den betreffenden Pay-TV-Kanal in dem von dem Produktcode bestimmten Umfang, zum Beispiel ein Fußball-WM für einen bestimmten Geldbetrag frei. Bei Ablauf der Karte, etwa bei Aufbrauchen des Geldbetrages oder des gesetzten zeitlichen Limits muß eine neue Karte erworben werden oder es muß die bereits benutzte Karte neu programmiert werden.

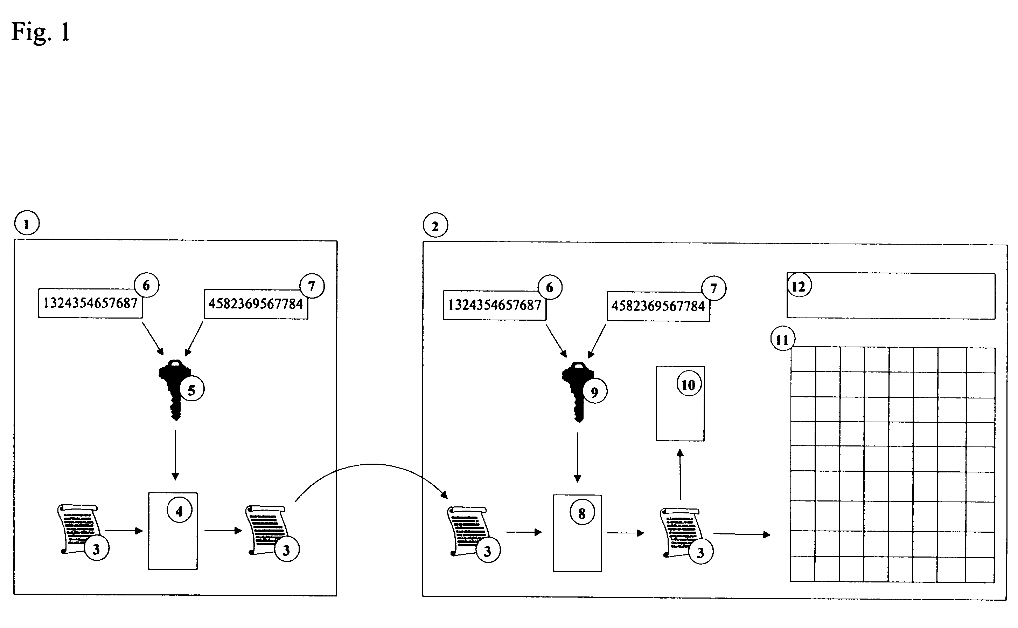

Ein beispielhaftes Verfahren gemäß der vorliegenden Erfindung wird in Figur 1 dargestellt. Figur 1 zeigt ein System zur Übertragung von Daten auf SmartCards.

Nach der vorliegenden Erfindung kann in obigem Beispiel, statt der weiterhin möglichen zentralen Programmierung, eine dezentrale Programmierung vorgenommen werden. Beispielsweise wird eine SmartCard, auf der noch keine Funktion spezifiziert wurde, am Kiosk für einen beliebigen Betrag verkauft und dann in der Höhe dieses Betrags für ein ausgewähltes Programmpaket, etwa die Fußball-WM, programmiert. Dazu kann die Karte beispielsweise bereits am Kiosk mit Hilfe einer entsprechenden Vorrichtung programmiert werden. Die Karte kann aber auch mit dem System des Betreibers über ein öffentlich und damit an sich abhörbares Netzwerk (Sat, Kabel, PSTN, Internet) Kontakt aufnehmen.

In einer Sendeeinheit 1, etwa beim Pay-TV-Betreiber, werden Daten 3 unter Verwendung eines ersten Schlüssels 5, der auf der Grundlage der Seriennummer 6 und der Losnummer 7 der SmartCard 2 generiert, in einer Verschlüsselungsfunktion 4 verschlüsselt. Die Seriennummer 6 und die Losnummer 7 sind der Sendeeinheit 1 entweder ursprünglich bekannt oder sie werden zum Zweck der individuellen Verschlüsselung an die Sendeeinheit 1 übertragen, etwa in verschlüsselter Form. Bei diesen zu übertragenen Daten 3 handelt es sich in diesem Beispielsfall um Authentifizierungsdaten, andere Daten wie zum Beispiel ein weiterer Schlüssel oder der Programmcode sind allerdings auch denkbar.

Diese verschlüsselten Daten 3 werden jetzt von der Sendeeinheit 1 an die SmartCard 2 übertragen.

In der SmartCard 2 werden die verschlüsselten Daten 3 in einer Entschlüsselungsfunktion 8 mit einem zweiten Schlüssel 9, der auf der Grundlage der Seriennummer 6 und der Losnummer 7 generiert wurde, entschlüsselt. Wenn es sich bei der Verschlüsselung um ein symmetrisches Verschlüsselungssystem handelt, sind die Schlüssel 5 und 9 gleich. Mit diesen nun entschlüsselten Authentifizierungsdaten kann der Betreiber der Karte beweisen, daß er beide Teile des inneren einzigartigen Schlüssels, also die Seriennummer 6 und die Losnummer 7 kennt. Diese Kontrolle der entschlüsselten Authentifizierungsdaten 3 findet in der Kontrollfunktion 10 statt. Denn nur, wenn die entschlüsselten Authentifizierungsdaten die von der Karte erwarteten Informationen enthalten, hat der Betreiber sich gegenüber der Karte mit diesen Daten authentifiziert. Bei den Authentifizierungsdaten kann es sich zum Beispiel um bestimmte Kombinationen der Seriennummer 6 und der Losnummer 7 handeln, die natürlich bei fast allen Karten wieder unterschiedlich sind, so daß sich aus der statistischen Analyse der verschlüsselten Authentifizierungsdaten keine nützlichen Informationen gewinnen lassen können.

Auf dem gleichen Weg kann der Betreiber nun zum Beispiel den Programmcode, oder auch einen weiteren Schlüssel, der für die Entschlüsselung des Programmcodes notwendig ist, an die Karte übertragen. Diese Daten werden allerdings nicht mehr in der Kontrollfunktion 10 überprüft, sondern direkt nach der Entschlüsselung in der Entschlüsselungsfunktion 8 in dem Speicher 11 gespeichert. Mit der Initialisierung dieses Programmcodes bekommt der Kunde dann den Zugang zu der von ihm bezahlten Programmkategorie.

Über die in dem Speicher 11 gespeicherten Daten 3 kann bei der Initialisierung und bei jeder berechtigten Veränderung der Daten 3 auf der SmartCard 2 mit einer Prüfsummenfunktion 12 ein Cyclic-Redundancy-Check gebildet und gespeichert werden. Bei jedem Neustart der SmartCard 2 wird über die gespeicherten Daten 3 der SmartCard 2 unter Verwendung der Prüfsummenfunktion 12 ein neuer Cyclic-Redundancy-Check gebildet und mit dem gespeicherten verglichen. Sollten diese beiden nicht übereinstimmen werden beispielsweise gezielt Daten 3 auf der SmartCard 2 gelöscht oder eine Alarmfunktion ausgelöst.

Die vorliegende Erfindung stellt damit ein Verfahren und ein System zur Verfügung, mit dessen Hilfe das Laden von Daten auf eine SmartCard einfacher, effektiver und sicher durchgeführt werden kann.

## Patentansprüche

1. Verfahren für die Übertragung von Daten (3) zwischen einer Sendeeinheit (1) und einer SmartCard (2), das mindestens folgende Schritte aufweist:
- Verschlüsselung der zu sendenden Daten (3) mit Hilfe eines ersten Schlüssels (5),
- Übertragung der verschlüsselten Daten (3) zwischen Sendeeinheit (1) und Chipkarte (2) und
- Entschlüsselung der übertragenen Daten (3) mit Hilfe eines zweiten Schlüssels (9),
**dadurch gekennzeichnet, daß**
die Daten (3) auf der Grundlage von spezifischen Informationen (6, 7) der SmartCard (2) ver- und entschlüsselt werden.

2. Verfahren nach Anspruch 1, dadurch gekennzeichnet, daß es sich bei den Daten (3) um Programmcode handelt, mit dem Funktionen der SmartCard programmiert werden können.

3. Verfahren nach Anspruch 1 oder 2, dadurch gekennzeichnet, daß die spezifischen Informationen die Losnummer (7) des Chips der SmartCard (2) und/oder die Seriennummer (6) der SmartCard (2) beinhalten.

4. Verfahren nach einem der Ansprüche 1 bis 3, dadurch gekennzeichnet, daß mittels eines Prüfsummenverfahrens unberechtigte Veränderungen an den Daten (3) auf der SmartCard (2) erkannt werden.

5. System zur Übertragung von Daten (3) mit einer Sendeeinheit (1) und einer SmartCard (2), wobei die Sendeeinheit (1) eine Ausgabeeinheit zur Weitergabe der Daten (3) an die SmartCard (2) und die SmartCard (2) eine Eingabeeinheit zur Entgegennahme der Daten (3) von der Sendeeinheit (1) enthält,
**dadurch gekennzeichnet, daß**
die Sendeeinheit (1) eine Funktion zur Verschlüsselung (4) der Daten (3) auf der Grundlage von spezifischen Informationen (6, 7) der SmartCard (2) mit Hilfe eines ersten Schlüssels (5) und die SmartCard (2) eine Funktion zur Entschlüsselung (8) der Daten (3) auf der Grundlage der spezifischen Informationen (6, 7) der SmartCard (2) mit Hilfe eines zweiten Schlüssels (9) aufweist.

6. System nach Anspruch 5, dadurch gekennzeichnet, daß es sich bei den Daten (3) um Programmcode handelt, mit dem Funktionen der SmartCard programmiert werden können.

7. System nach Anspruch 5 oder 6, dadurch gekennzeichnet, daß die Verschlüsselung der Daten (3) und die Entschlüsselung der Daten (3) auf der Grundlage der Losnummer (7) des Chips und/oder der Seriennummer (6) der SmartCard (2) erfolgt.

8. System nach einem der Ansprüche 5 bis 7, dadurch gekennzeichnet, daß die SmartCard (2) eine Prüfsummen-Funktion (12) zur Erkennung von unberechtigten Veränderungen der auf der SmartCard (2) gespeicherten Daten (3) aufweist.
